# FASCICULE DE BREVET EUROPEEN

(11) **EP 1 569 522 B1**
(45) Date de publication et mention de la délivrance du brevet: **11.04.2007**
(21) Numéro de dépôt: 03789472.2
(22) Date de dépôt: 21.11.2003
(51) Int. Cl.: A23G 1/00, A23G 1/18, A23G 1/02

(54) **PROCEDE DE PRODUCTION DE PARTICULES**
VERFAHREN ZUM HERSTELLEN VON PARTIKELN
METHOD FOR PRODUCING PARTICLES

(30) Priorité: 21.11.2002 FR 0214586; 29.07.2003 FR 0309310
(43) Date de publication de la demande: 07.09.2005
(73) Titulaire: Centre National de la Recherche Scientifique - CNRS, 75016 Paris Cedex 16 (FR); Ecole Nationale Superieure des Technique Industrielles et des Mines D'Albi Carmaux ( Enstimac), 81013 Albi Cédex 9 (FR)
(72) Inventeur: FAGES, Jacques, F-81000 Albi (FR); LETOURNEAU, Jean-Jacques, F-31380 Gragnague (FR); GONUS, Philippe, York Y032 3GL (GB)
(74) Mandataire: Warcoin, Jacques
(86) Numéro de dépôt international: PCT/FR2003/003457
(87) Numéro de publication internationale: WO 2004/047544

(56) Documents cités:
- EP-A- 0 294 974
- WO-A-00/72695
- US-A- 6 056 791
- US-B1- 6 284 302
- KOKOT ET AL.: "S-L-G (solid-liquid-gas) phase transition of cocoa butter in supercritical CO2" ACTA ALIMENTARIA, vol. 28, no. 2, juin 1999 (1999-06), pages 197-208, XP009014704 Budapest cité dans la demande

## Description

L'invention concerne un procédé de production de particules ou de solides divisés généralement sous forme de poudre comprenant de la matière grasse au moins en partie cristallisée, en particulier pour la production de cristaux de matière grasse, par exemple et de préférence de beurre de cacao. L'invention concerne aussi un procédé de production de particules ou de solides divisés généralement sous forme de poudre comprenant au moins de la matière grasse, par exemple de poudre de chocolat qui renferme du beurre de cacao, du sucre et d'autres matières, grasses ou non, d'origine végétale ou animale. L'invention concerne aussi un dispositif de mise en oeuvre d'un tel procédé.

Le beurre de cacao est une matière grasse polymorphe pouvant se cristalliser sous différentes formes (voir par exemple « Les performances du beurre de cacao dans le chocolat », *Industries Alimentaires & Agricoles, décembre 2001, p.11-14).* Parmi les différentes formes cristallines, on distingue : γ (ou forme I), α (ou forme II), β' 2 (ou forme III) β'1 (ou forme IV), β2 (ou forme V) et β1 (ou forme VI). La stabilité thermodynamique, ainsi que la température de fusion croît de la forme I à la forme VI. Bien que métastable (évolution très lente dans les conditions normales de température et de pression vers la forme VI stable), la forme V doit pour des raisons organoleptiques être majoritaire dans le chocolat. En effet la forme VI donne un aspect plutôt terne peu souhaitable au chocolat.

Les particules cristallines de beurre de cacao ou de chocolat peuvent servir de semences pour la fabrication du chocolat lors d'une étape de tempérage. Le tempérage comprend une succession d'une étape de refroidissement du chocolat liquide, suivie d'une étape de réchauffage dont l'objectif est d'éliminer les formes de I à IV. Le tempérage doit permettre l'apparition du plus grand nombre de cristaux de forme V, pour garantir une cristallisation rapide et parfaite principalement sous la forme V métastable. Cela permet d'assurer une meilleure qualité au chocolat ainsi fabriqué. Pour améliorer encore cette cristallisation, il est possible, selon un mode de réalisation particulier de l'art antérieur, peu utilisé, de procéder à l'ensemencement en beurre de cacao de forme V.

Pour effectuer le tempérage proprement dit, on refroidit de façon usuelle jusqu'à environ 20-25°C le chocolat liquide pour provoquer l'apparition de cristaux de beurre de cacao. Des cristaux de toutes les formes apparaissent généralement, y compris des cristaux de formes instables. L'ensemencement par des cristaux de forme V, selon le mode de réalisation particulier de l'art antérieur évoqué ci-dessus, peut permettre de limiter ce phénomène. Le mélange est ensuite généralement réchauffé à environ 30°C pour faire fondre les cristaux de forme I à IV et n'avoir plus que des cristaux de forme V et si possible toujours pratiquement pas de forme VI. Après un certain temps, au cours duquel on a généralement laissé croître et se multiplier de façon contrôlée les cristaux de forme V, réalisant ainsi la formation de semences in situ (sans ensemencement par apport de matière extérieure), on envoie habituellement le chocolat ainsi fabriqué vers la suite des procédés de fabrication du chocolat (moulage en tablettes etc).

Les cristaux de beurre de cacao nécessaires pour la réalisation de l'ensemencement lors du tempérage, selon le mode de réalisation particulier de l'art antérieur évoqué ci-dessus, sont généralement obtenus par procédé mécanique par exemple par broyage en grains. Dans ce cas, les cristaux ainsi obtenus ne présentent pas la forme polymorphique cristalline souhaitée, et ont une morphologie ne convenant pas bien pour des semences, car la surface des grains est abîmée et/ou écrasée par un tel procédé mécanique de production. Plus récemment il a été décrit l'utilisation d'un procédé de type PGSS (pour « Particles from Gas Saturated Solutions ») pour la fabrication de cristaux de beurre de cacao sous forme de fine poudre de cristaux : *«S-L-G (Solid-Liquid-Gas) phase transi ti on of cocoa butter in supercritical CO₂ », Acta alimentaria, vol 28 (2), pp 197-208 (1999) et «High Pressure Process Technology: Fundamentals and Applications», paragraph 9.8.7.2 « Cocoa butter », p. 603-604, Industrial Chemistry Library, Vol. 9 (2001).* Un tel procédé consiste en la production en fines particules à partir de solutions saturées de gaz, qui commence par la dissolution d'un fluide dans la substance à produire préalablement fondue. On procède ensuite à une expansion de la solution saturée en gaz, provoquant la cristallisation des particules. Les cristaux ainsi obtenus sont principalement sous forme VI de température de fusion de l'ordre de 36-37°C, alors que l'on recherche plutôt comme explicité plus haut pour la production industrielle de chocolat une morphologie de cristaux de forme V, de température de fusion de l'ordre de 33°C. Par suite, il subsiste le besoin d'élaborer un procédé de production de particules, en particulier de cristaux de beurre de cacao, qui permette de récupérer le plus de cristaux possibles, de préférence sous forme de cristaux de forme V, et de la meilleure qualité qu'il soit, c'est-à-dire pratiquement pures en tant que réseau cristallin. Le procédé de l'invention permet avantageusement de répondre à ce besoin.

Le procédé selon l'invention est un procédé de production de particules au moins en partie cristallisées, sous pression, comprenant une dissolution réciproque d'au moins un fluide sous pression supérieure ou légèrement inférieure à sa pression critique, avec au moins une substance à traiter, dans une zone de dissolution, puis une dépressurisation rapide grâce à au moins un moyen de dépressurisation, en aval de la zone de dissolution, de façon à collecter lesdites particules, au moins en partie cristallisées, dans une zone de collecte située en aval dudit moyen de dépressurisation, ladite substance à traiter comprenant de la matière grasse, ledit procédé étant caractérisé en ce que l'on procède aussi à une collecte de particules au moins en partie cristallisées dans la zone de dissolution.

Les particules collectées dans la zone de collecte et dans la zone de dissolution au moins en partie cristallisées sont des particules qui peuvent comprendre différentes matières dont de la matière grasse, qui est selon l'invention en majeure partie, de préférence pratiquement totalement, cristallisée. Lesdites particules, en particulier dans le cas où la substance à traiter est du chocolat, comprennent aussi d'autres composants. Dans le cas où la substance à traiter est du beurre de cacao, lesdites particules sont des cristaux de la matière grasse qu'est le beurre de cacao.

Typiquement, ladite collecte se fait après la dépressurisation qui a conduit à une cristallisation de la matière grasse desdites particules.

La substance à traiter renferme généralement de 10 à 100 % de matière grasse, de préférence de 20 à 50 % dans le cas où la substance à traiter est du chocolat.

La substance à traiter est selon l'invention la substance telle que présente dans la zone de dissolution. Elle est sous forme solide et/ou liquide. Par exemple elle est sous forme solide et au moins en partie sous forme fondue, liquide. Ainsi, dans le cas où la substance à traiter est du chocolat, et où il est introduit en zone de dissolution sous forme fondue, il contient des particules en suspension, seule la matière grasse étant liquide. Le procédé selon l'invention peut aussi comprendre au moins une étape préalable d'introduction de ladite substance à traiter dans la zone de dissolution. Ladite étape préalable d'introduction s'effectue de façon classique, connue de l'homme du métier.

La dissolution est qualifiée de réciproque, car à la fois de la substance à traiter sous forme solide et/ou liquide se dissout dans le fluide et du fluide se dissout dans la substance à traiter lorsqu'elle est liquide. Cette dissolution réciproque peut conduire selon les conditions opératoires soit à la présence d'une seule phase fluide homogène, soit à la coexistence de deux phases fluides en équilibre. Dans le cas où la substance à traiter est du chocolat qui ne contient pas que de la matière grasse, des particules insolubles, telles que par exemple des particules de sucre et/ou d'édulcorant, sont dispersées dans le fluide. En effet, le chocolat comprend généralement de nombreux ingrédients dont les principaux sont le beurre de cacao et le sucre. Il peut comprendre aussi au moins un arôme, de l'amidon, de la cellulose et d'autres matières pouvant provenir des fèves de cacao. Enfin, il peut contenir d'autres ingrédients y compris d'autres matières grasses, par exemple du lait dans le cas où la substance à traiter est du chocolat au lait. On parle de particules de chocolat lorsque celui-ci est solide généralement sous forme de poudre, quelle que soit sa composition. Sa matière grasse est alors de préférence dans le cadre de l'invention au moins en partie cristallisée.

De préférence, ledit moyen de dépressurisation est une buse d'expansion.

De façon avantageuse, et surprenante, un tel procédé permet de collecter en zone de dissolution des particules ne présentant pratiquement pour leur matière grasse qu'une seule forme polymorphique cristalline, et une surface spécifique élevée.

Avantageusement, et de façon surprenante, un tel procédé permet de collecter des particules de qualité cristalline suffisamment bonne à l'état solide pour servir de semence dans un procédé d'utilisation de telles particules. Dans le cas où la substance à traiter est du beurre de cacao, les particules cristallines obtenues présentent un aspect anguleux et une granulométrie généralement inférieure à 20 µm et pouvant être inférieure à 1 µm. Ainsi, et de façon surprenante, le procédé selon l'invention permet de façon particulièrement avantageuse de récupérer des particules de beurre de cacao de forme cristalline V. Dans le cas où la substance à traiter est du chocolat, on récupère le plus souvent et avantageusement des particules de grande finesse, c'est-à-dire de taille inférieure à 50 µm, et très homogènes. La matière grasse contenue dans ces particules de chocolat est généralement majoritairement du beurre de cacao de forme cristalline V.

Par « collecte », on entend selon l'invention que l'on peut récupérer directement les particules dont on dispose, depuis ces zones de dissolution et de collecte, par la suite, ou bien que ces particules sont utilisées directement, car elles arrivent dans une zone de collecte où elles peuvent servir directement de semences dans l'étape de tempérage de la fabrication du chocolat.

Ainsi, selon un mode de réalisation particulier du procédé de l'invention, la zone de collecte des particules est une zone de transformation dans laquelle est réalisé un tempérage (ou une cristallisation) de matière grasse. Typiquement il peut s'agir lors du procédé de production de chocolat de la zone où le tempérage doit être effectué. Les particules servent alors à ensemencer la masse de chocolat liquide. Le procédé selon l'invention est alors avantageusement un procédé continu, qui peut avantageusement être mis en oeuvre au sein d'un procédé (habituel) de tempérage de chocolat. Par procédé continu, on entend selon l'invention un procédé pouvant fonctionner de manière continue, par opposition à un procédé « batch »

Selon un mode de réalisation de l'invention, le fluide est additionné d'au moins un composé chimique ou co-solvant, qui a pour fonction d'augmenter le pouvoir solvant du fluide supercritique. Un tel co-solvant est en général ajouté au fluide en quantité de 1 à 5% en poids, et est par exemple un alcool tel que l'éthanol.

Selon un mode de réalisation de l'invention, on procède à la séparation du fluide sous forme gazeuse après dépressurisation, et des particules, généralement sous forme solide, dans la zone de collecte et/ou dans la zone de dissolution. Ladite séparation peut être constituée simplement et avantageusement d'une récupération du gaz par exemple par ventilation pour éliminer le gaz de la zone de collecte et/ou de la zone de dissolution.

Le fluide sous pression est généralement choisi dans le groupe formé par le dioxyde de carbone, les alcanes à chaîne courte c'est-à-dire comprenant généralement de 1 à 4 atomes de carbone par molécule, le protoxyde d'azote et l'azote, et leurs mélanges, et de façon préférée ledit fluide sous pression est le dioxyde de carbone. Une telle pression est généralement de 70 à 350 bar (7 à 35 MPa), de préférence de 200 à 300 bar (20 à 30 MPa), par exemple égale à environ 250 bar (25 MPa).

Dans un mode de réalisation préféré du procédé selon l'invention, ledit fluide sous pression est à l'état supercritique, c'est-à-dire à température au dessus de la température critique et à pression au-dessus de la pression du point critique. Par exemple dans le cas du dioxyde de carbone la température est supérieure ou égale à la température du point critique ou température critique, qui est égale à 31,1 °C, et la pression est supérieure ou égale à la pression du point critique ou pression critique, qui est égale à 73,8 bar (7,38 MPa). Par exemple dans le cas du protoxyde d'azote la température est supérieure ou égale à la température du point critique ou température critique, qui est égale à 36,5 °C, et la pression est supérieure ou égale à la pression du point critique ou pression critique, qui est égale à 72,4 bar (7,24 MPa) .

Dans un autre mode de réalisation préféré du procédé selon l'invention, ledit fluide sous pression est à l'état sous critique, tel que la température (opérationnelle) est légèrement au dessous de la température critique, c'est-à-dire présente une valeur comprise entre 0,9 Tc et Tc, Tc étant la température critique, et la pression est supérieure ou légèrement au-dessous de la pression du point critique. Par exemple, dans le cas du dioxyde de carbone, la température est inférieure à 31,1 °C et la pression est supérieure à 73,8 bar (7,38 MPa), et de préférence supérieure à 200 bar (20 MPa). Par exemple, dans le cas du protoxyde d'azote, la température est inférieure à 36,5 °C et la pression est supérieure à 72,4 bar (7,24 MPa), et de préférence supérieure à 150 bar (15 MPa).

Selon un mode de réalisation préféré du procédé selon l'invention, la température et/ou la pression dans la zone de dissolution et/ou la zone de collecte est contrôlée de telle façon que, au cours dudit procédé, le fluide sous pression ne cristallise pas lors de l'étape de détente (de dépressurisation) et que, de plus, les particules au moins en partie cristallisées ne fondent pas. Typiquement, par exemple, la température dans la zone de dissolution est contrôlée de telle façon que, au cours dudit procédé, le fluide sous pression ne cristallise pas lors de l'étape de détente et que, de plus, les particules au moins en partie cristallisées ne fondent pas. Ainsi, dans le cas de production de particules cristallisées de beurre de cacao seules ou dans des particules de chocolat, avec du dioxyde de carbone, la température de ladite zone de dissolution est généralement maintenue inférieure à environ 30°C et supérieure à environ 20°C.

Selon un mode de réalisation préféré du procédé selon l'invention, le temps de contact dans la zone de dissolution est réglé de telle sorte que le plus possible de substance à traiter soit solubilisé. Cela permet avantageusement de rentabiliser au maximum le procédé selon l'invention.

Selon une variante du procédé selon l'invention, pour favoriser la dissolution, on met de la substance à traiter en excès dans la zone de dissolution avant la mise en oeuvre du procédé selon l'invention. Alors, on récupère l'excès non solubilisé dans la zone de dissolution, après la mise en oeuvre du procédé selon l'invention. Dans le cas de la production de particules de beurre de cacao cristallisées, à partir d'une substance à traiter qui est du beurre de cacao, et où l'on met ainsi avantageusement un excès de beurre de cacao dans la zone de dissolution avant la mise en oeuvre du procédé selon l'invention, il est particulièrement aisé à la suite de la mise en oeuvre du procédé selon l'invention de séparer les morceaux jaunâtres de beurre de cacao non solubilisé de la poudre fine, blanche et légère, constituée des cristaux de beurre de cacao que l'on a produit.

Selon une autre variante du procédé selon l'invention, indépendante ou non de la variante précédente, on agite à l'aide d'au moins un moyen d'agitation la substance à traiter et le fluide lors de leur dissolution réciproque dans la zone de dissolution de façon à favoriser la dissolution, avant la dépressurisation. Dans le cas où la substance à traiter est du chocolat, cette variante permet avantageusement d'homogénéiser le mélange solide-fluide.

Dans le cas préféré selon l'invention où la substance à traiter est du beurre de cacao et de l'utilisation de dioxyde de carbone à l'état supercritique, on dissout généralement environ 1% en poids de beurre de cacao dans le dioxyde de carbone à l'état supercritique, selon les conditions de pression et de température.

L'invention concerne enfin les particules susceptibles d'être précipitées par un procédé selon l'invention. Dans le cas où la substance à traiter est pratiquement totalement du beurre de cacao, de telles particules présentent avantageusement et de façon singulière une morphologie au microscope électronique à balayage environnemental (ou MEBE) particulière, en ce que les cristaux sont anguleux et en ce que leur granulométrie est généralement de quelques centaines de nanomètres à une vingtaine de micromètres.

L'invention concerne aussi l'utilisation d'un procédé tel que décrit précédemment, pour une fabrication de particules dont la matière grasse est au moins en partie, de préférence en majeure partie, de façon encore plus préférée pratiquement totalement, cristallisée, et de préférence pour une fabrication de particules cristallisées de beurre de cacao, généralement seules ou dans des particules de chocolat.

De manière particulièrement avantageuse, un tel procédé permet ainsi de récupérer des particules dont la matière grasse est majoritairement (plus de 90% en poids) de forme V pour servir de semences lors d'un procédé de tempérage ultérieur. En particulier, le procédé de tempérage ultérieur, qui utilise lesdites particules et/ou au sein duquel le procédé selon l'invention est mis en oeuvre, permet d'utiliser une quantité moindre de semences par rapport aux quantités de l'art antérieur, soit typiquement d'environ 0,1% en poids au lieu des quelques % en poids utilisés selon le mode de réalisation particulier de l'art antérieur évoqué précédemment (Voir par exemple « *crystallising the fat in chocolate », p91,* dans « *The Science of Chocolate »,* de *S.T.Beckett, RSC paperbacks, Cambridge UK).* De plus on peut ensemencer à une température plus haute que les 30°C habituels de l'art antérieur usuel (sans ensemencement par apport de matière extérieure), par exemple à environ 32°C. Une telle possibilité permet avantageusement de travailler en tempérage sur une pâte moins visqueuse que la pâte habituellement travaillée, ce qui se traduit par une économie d'énergie pour l'agitation et une plus grande facilité de manipulation pour les écoulements de pâte. Et enfin, on peut avantageusement raccourcir l'étape de refroidissement habituellement mise en oeuvre lors du tempérage du chocolat. Le tempérage se réalise aussi généralement de façon beaucoup plus courte que classiquement, avantageusement en 4 à 5 minutes au lieu des 30 minutes habituelles de l'art antérieur usuel, ce qui se traduit par une double économie de temps et d'énergie.

L'invention concerne aussi un dispositif de production de particules au moins en partie cristallisées, sous pression selon la revendication 15. Ce dispositif comprend au moins un premier réacteur de dissolution réciproque d'au moins une substance à traiter avec au moins un fluide sous pression supérieure ou légèrement inférieure à sa pression critique, puis au moins un moyen de dépressurisation, en aval du premier réacteur de dissolution, qui alimente au moins un second réacteur de collecte de particules au moins en partie cristallisées, en aval dudit moyen de dépressurisation. Dans ce dispositif le premier réacteur de dissolution est aussi un réacteur de collecte de particules au moins en partie cristallisées.

Selon un mode de réalisation de l'invention, ledit second réacteur est un réacteur dans lequel peut se produire au moins une transformation d'une substance à traiter, par exemple lors d'une étape de tempérage de chocolat. De préférence un tel réacteur est apte à fonctionner en continu.

Selon un mode de réalisation de l'invention, ledit dispositif comprend au moins un moyen d'agitation au sein du premier réacteur. Un tel moyen d'agitation est typiquement une turbine à pales de type module Rushton, comprenant un disque horizontal et au moins deux pales pouvant être inclinées. Un tel moyen d'agitation n'est pas obligatoire selon l'invention mais améliore avantageusement la dissolution dans le premier réacteur.

Selon un mode de réalisation de l'invention, ledit dispositif comprend au moins un moyen de mélange d'un co-solvant au fluide.

De préférence, ladite cristallisation se fait par dépressurisation grâce à au moins un moyen de dépressurisation. De préférence, ledit moyen de dépressurisation est une buse d'expansion.

De façon préférée, le moyen de dépressurisation est choisi de façon à régler le temps de dépressurisation.

Le dispositif selon l'invention est donc particulièrement bien adapté pour la mise en oeuvre du procédé selon l'invention.

Le dispositif selon l'invention est particulièrement bien adapté à une utilisation pour une fabrication de cristaux de matière grasse, et plus particulièrement et de préférence pour une fabrication de cristaux de beurre de cacao, généralement seuls ou dans du chocolat. Ainsi, Le dispositif selon l'invention est particulièrement bien adapté à une utilisation pour une fabrication de particules de chocolat. La définition des particules de chocolat a été donnée précédemment.

Le beurre de cacao est une matière grasse extraite du cacao, ou de la pâte de cacao par pression mécanique. Ce beurre de cacao est généralement constitué principalement de trois triglycérides, qui sont le 1,3-dipalmitique 2-oléique glycérol ou POP, le 1-palmitique 2- oléique 3-stéarique glycérol ou POS et le 1,3-distéarique 2-oléïque glycérol ou SOS. Les cristaux de beurre de cacao peuvent avantageusement servir de semences pour la fabrication du chocolat par tempérage, comme explicité précédemment.

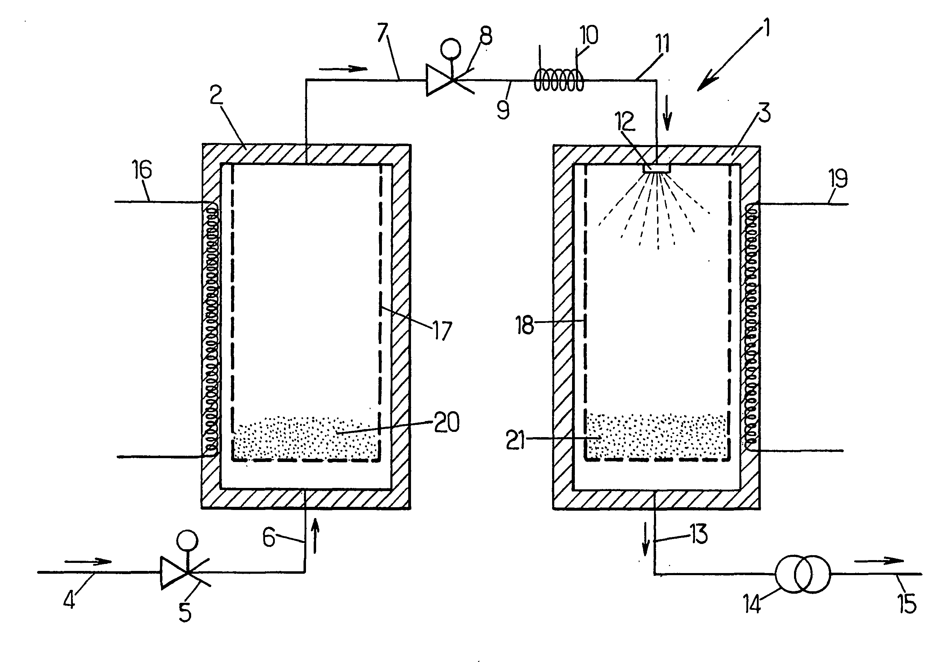

L'invention sera mieux comprise et d'autres caractéristiques et avantages apparaîtront à la lecture de la description qui va suivre, donnée à titre non limitatif, par référence à la figure.

La figure représente schématiquement un dispositif 1 de production de particules 20, 21 au moins en partie cristallisées selon l'invention.

Une conduite 4 puis une conduite 6 après passage par une vanne 5 permettent d'alimenter le premier des deux réacteurs 2 et 3 successifs, représentés en coupe, par un fluide sous pression supérieure ou légèrement inférieure à sa pression critique. Les réacteurs 2 et 3 sont typiquement des autoclaves en inox massif. La vanne 5 permet de fermer l'alimentation en ledit fluide quand nécessaire. Le réacteur 2 est un réacteur de dissolution d'une substance à traiter avec un fluide sous pression, et permet selon l'invention une collecte de particules 20 au moins en partie cristallisées. Typiquement, avant la mise en oeuvre du procédé selon l'invention, le réacteur 2 comprend la substance à traiter et la mise en oeuvre dudit procédé débute par l'apport dudit fluide. Pour favoriser la dissolution dudit fluide et de la substance à traiter, le réacteur 2 comprend avantageusement la présence d'un moyen d'agitation, par exemple une turbine de type Rushton, comprenant, au bout d'un arbre traversant le dit réacteur 2, un disque horizontal et des pales. Le réacteur 3 est un réacteur de collecte de particules 21 au moins en partie cristallisées. Le réacteur 2 est muni d'un moyen de chauffage 16, qui est une résistance chauffante. Le réacteur 3 est muni d'un moyen de chauffage 19, qui est une résistance chauffante. Les réacteurs 2 et 3 comprennent chacun un panier interne respectivement 17 et 18, typiquement en inox poreux (fritté), facilitant la collecte des particules produites. Le réacteur 3 est alimenté en mélange fluide par une conduite 7 qui sort du réacteur 2, puis devient une conduite 9 après passage par une vanne 8, puis devient une conduite 11 après chauffage par un moyen de chauffage 10, qui est une résistance chauffante. La conduite 11 débouche au sein du réacteur 3 par un moyen de dépressurisation 12 qui est typiquement une buse d'expansion. Du réacteur 3 part une conduite 13 de soutirage de produit, qui devient une conduite 15 après passage par un déverseur 14. Le déverseur 14 permet en particulier de contrôler la pression dans le second réacteur, pour la maintenir généralement à une pression inférieure, de préférence très inférieure, à la pression du premier réacteur 2 mais supérieure ou égale à la pression atmosphérique.

De la substance à traiter (non représentée) est présente dans le réacteur 2 avant la production de particules 20 et 21. Lors de la mise en oeuvre du procédé selon l'invention, de la substance à traiter est placée dans le réacteur 2, qui est isolé. Puis en ouvrant la vanne 5 on introduit par les conduites 4 puis 6 du fluide sous pression, qui aux conditions de température et de pression du premier réacteur 2, permettent la dissolution réciproque au moins partielle de ladite substance avec ledit fluide, au cours d'un temps de contact, ladite dissolution étant favorisée par la rotation de la turbine. On produit un mélange fluide que l'on réchauffe lors du passage du premier réacteur 2 vers le second réacteur 3, grâce au moyen de chauffage 10. On ouvre la vanne 8, qui était en position fermée au départ, de façon à ce que le mélange fluide issu du premier réacteur 2, traversant les conduites 7, 9 et 11, puis le moyen de pulvérisation 12, s'écoule dans le second réacteur 3 en subissant une dépressurisation généralement extrêmement rapide. Cette dépressurisation conduit à la formation par cristallisation de formes solides de la substance à traiter, qui sont des particules 21, que l'on peut récupérer après cristallisation. Le réchauffage par le moyen de chauffage 10 à l'ouverture de la vanne 8 permet avantageusement d'éviter la formation de neige carbonique après dépressurisation. En même temps une dépressurisation lente s'opère dans le premier réacteur 2. Cela conduit à la formation par cristallisation de formes solides cristallisées de la substance à traiter, qui sont des particules 20, que l'on peut collecter après cristallisation. Il est possible selon un mode de réalisation du procédé selon l'invention de procéder dans le même temps à une ouverture contrôlée de la vanne 5 de façon à ce que la pression au sein du premier réacteur 2 reste pratiquement constante. Dans tous les cas, la cristallisation des particules 20 dans le premier réacteur 2 a lieu lors de la dépressurisation dudit réacteur 2.

L'exemple qui suit illustre l'invention sans pour autant en limiter la portée.

### EXEMPLE : précipitation du beurre de cacao dissous dans du dioxyde de carbone à l'état supercritique

Dans l'exemple qui suit, on utilise un dispositif 1 tel que décrit précédemment. Le fluide sous pression supérieure ou légèrement inférieure à sa pression critique est du dioxyde de carbone. Son état supercritique correspond à un état où sa température est supérieure à 31°C et sa pression est supérieure à 74 bars (soit 7,4 MPa). Dans ces conditions, la substance à traiter, qui est du beurre de cacao comprenant 97% de triglycérides selon la répartition suivante : 12 à 18% de POP, 36 à 46% de POS et 21 à 30% de SOS, et 10 à 15% d'autres triglycérides, se dissout dans le dioxyde de carbone et réciproquement.

On procède de la façon expliquée précédemment, à l'exception du fait que le réacteur 2 ne comprend pas de turbine. On ferme l'alimentation en dioxyde de carbone avant de procéder à la dissolution réciproque du beurre de cacao avec le dioxyde de carbone. Lors de ladite dissolution, la température est de 30°C dans le premier réacteur 2, et la pression initiale dans ledit premier réacteur 2 est de 250 bar, soit de 25 MPa. On procède à la détente par l'ouverture de la vanne 8. Le moyen de dépressurisation est une buse 12 d'orifice circulaire de diamètre égal à 340 µm et de longueur 3 mm. La détente, à vanne 5 fermée et à vanne 8 ouverte, est de durée environ 5 minutes, soit 300 secondes. La température du mélange fluide après chauffage par le dispositif 10 en amont de la buse est de 80°C. La température dans le second réacteur 3 est de 15°C, et la pression est de 5 bar (soit 0,5 MPa). Puis on dépressurise les deux réacteurs 2 et 3, après avoir refermé la vanne 8. On récolte des cristaux de beurre de cacao 20 et 21 dans chacun des deux réacteurs, dont on étudie le polymorphisme respectif par analyse de calorimétrie différentielle ou DSC (pour « Differential Scanning Calorimetry »). On mesure la température de fin de fusion des cristaux, ou « end-set point », de façon à caractériser les cristaux. Le protocole de la mesure DSC est celui décrit dans l'article « *Phase transitions and polymorphism of cocoa butter »* publié dans *JAOCS vol75 (4) 425-439, 1998,* et dont une partie est reprise brièvement ci-après : l'appareil est un appareil DSC-7 Perkin-Elmer, et le protocole d'analyse des échantillons est le suivant : démarrage à -5°C puis chauffage à raison de 5°C par minute. On constate une température de fin de fusion pour les particules 20 du premier réacteur 2 de 33,1°C, ce qui correspond principalement à la forme V plus particulièrement recherchée. On constate une température de fin de fusion pour les particules 21 du second réacteur 3 inférieure à 28°C, ce qui correspond principalement aux formes instables I, II, III et IV.

Lesdits cristaux 20 sont avantageusement utilisés pour l'ensemencement du chocolat dans la fabrication de chocolat par tempérage. Leur polymorphisme cristallin convient particulièrement bien au procédé, ainsi qu'explicité précédemment.

## Revendications

1. Procédé de production de particules (20, 21) au moins en partie cristallisées, sous pression, comprenant une dissolution réciproque d'au moins un fluide sous pression supérieure ou légèrement inférieure à sa pression critique, avec au moins une substance à traiter, dans une zone de dissolution (2), puis une dépressurisation rapide grâce à au moins un moyen de dépressurisation (12), en aval de la zone de dissolution (2), de façon à collecter lesdites particules (21), au moins en partie cristallisées, dans une zone de collecte (3) située en aval dudit moyen de dépressurisation (12), ladite substance à traiter comprenant de la matière grasse, ledit procédé étant **caractérisé en ce que** l'on procède aussi à une collecte de particules (20) au moins en partie cristallisées dans la zone de dissolution (2).

2. Procédé selon la revendication 1 tel que la zone de collecte (3) des particules est une zone de transformation.

3. Procédé selon l'une des revendications 1 ou 2 tel que le fluide est additionné d'au moins un co-solvant qui est ajouté au fluide en quantité de 1 à 5% en poids.

4. Procédé selon l'une des revendications 1 à 3 tel que le fluide est additionné d'au moins un co-solvant qui est un alcool tel que l'éthanol.

5. Procédé selon l'une des revendications 1 à 4 tel que l'on procède à la séparation du fluide, sous forme gazeuse, et des particules, sous forme solide, dans la zone de dissolution (2) et/ou dans la zone de collecte (3).

6. Procédé selon l'une des revendications 1 à 5 dans lequel on agite à l'aide d'au moins un moyen d'agitation la substance à traiter et le fluide lors de leur dissolution réciproque dans la zone de dissolution (2) de façon à favoriser la dissolution, avant la dépressurisation.

7. Procédé selon l'une des revendications 1 à 6 dans lequel ledit fluide sous pression est choisi dans le groupe formé par le dioxyde de carbone, les alcanes à chaîne courte, le protoxyde d'azote et l'azote, et leurs mélanges.

8. Procédé selon l'une des revendications 1 à 7 dans lequel ledit fluide sous pression est le dioxyde de carbone.

9. Procédé selon l'une des revendications 1 à 8 dans lequel ledit fluide sous pression est à l'état supercritique.

10. Procédé selon l'une des revendications 1 à 9 dans lequel la température dans la zone de dissolution (2) est contrôlée de telle façon que, au cours dudit procédé, le fluide ne cristallise pas après détente, et que les particules au moins en partie cristallisées (20) ne fondent pas.

11. Procédé selon l'une des revendications 1 à 10 tel que l'on met de la substance à traiter en excès dans la zone de dissolution (2) avant la mise en oeuvre du procédé selon l'invention.

12. Procédé selon l'une des revendications 1 à 11 qui est un procédé continu mis en oeuvre au sein d'un procédé de tempérage de chocolat.

13. Particules (20) cristallisées par un procédé selon l'une des revendications 1 à 12.

14. Utilisation d'un procédé selon l'une des revendications 1 à 12, pour une fabrication de particules dont la matière grasse est au moins en partie cristallisée, et de préférence pour une fabrication de particules dont la matière grasse comprend des particules cristallisées de beurre de cacao.

15. Dispositif pour la mise en oeuvre du procédé de production de particules au moins partiellement cristallisées selon l'une quelconque des revendications 1 à 12, comprenant
au moins un premier réacteur (2) pressurisable alimenté par une première conduite (4, 6) pouvant être fermée par une vanne (5), et
au moins un deuxième réacteur (3) alimenté par une deuxième conduite (7, 9, 11) sortant du premier réacteur (2) et débouchant dans le deuxième réacteur au niveau d'un moyen de pulvérisation (12) permettant une dépressurisation rapide, ladite deuxième conduite pouvant être fermée par une vanne (8) et chauffée par un moyen de chauffage (10), et
une troisième conduite (13, 15), sortant du deuxième réacteur, comportant un déverseur (14) permettant de contrôler la pression dans le second réacteur pour la maintenir à une pression inférieure à la pression du premier réacteur mais supérieure ou égale à la pression atmosphérique,
les réacteurs (2, 3) étant munis chacun d'un moyen de chauffage (16, 19) et contenant chacun un panier interne (17,18) facilitant la collecte des particules produites.

16. Dispositif selon la revendication 15, dans lequel le moyen de pulvérisation (12) est choisi de manière à permettre le réglage du temps de dépressurisation.

17. Dispositif selon la revendication 15 ou 16, dans lequel le premier réacteur (2) comprend en outre au moins un moyen d'agitation.

18. Utilisation d'un dispositif selon l'une des revendications 15 à 17 pour la fabrication de cristaux de matière grasse, de préférence pour la fabrication de cristaux de beurre de cacao.

## Claims

1. Method for producing particles (20, 21), which are at least partially crystallized, under pressure, comprising reciprocal dissolution of at least one fluid under higher or slightly lower pressure than its critical pressure, with at least one substance to be treated, in a dissolvation zone (2), followed by rapid depressurization with at least one depressurizing means (12), downstream of the dissolving zone (2), so as to collect said particles (21), at least partially crystallized, in a collecting zone (3) located downstream of said depressurizing means (12), said substance to be treated comprising fat, said method being **characterized in that** it further consists in collecting particles (20) at least partially crystallized in the dissolving zone (2).

2. Method according to Claim 1 such that the particle collecting zone (3) is a conversion zone.

3. Method according to either of Claims 1 and 2 such that the fluid contains at least one cosolvent which is added to the fluid and a quantity of 1 to 5% by weight.

4. Method according to one of Claims 1 to 3 such that the fluid contains at least one cosolvent which is an alcohol such as ethanol.

5. Method according to one of Claims 1 to 4 such that the fluid, in gaseous form, and the particles, in solid form, are separated in the dissolving zone (2) and/or in the collecting zone (3).

6. Method according to one of Claims 1 to 5, in which at least one stirring means is used to stir the substance to be treated and the fluid during their reciprocal dissolution in the dissolving zone (2) so as to promote dissolution, before the depressurization.

7. Method according to one of Claims 1 to 6, in which said pressurized fluid is selected from the group formed from carbon dioxide, short-chain alkanes, nitrous oxide and nitrogen, and mixtures thereof.

8. Method according to one of Claims 1 to 7, in which said pressurized fluid is carbon dioxide.

9. Method according to one of Claims 1 to 8, in which said pressurized fluid is in the supercritical state.

10. Method according to one of Claims 1 to 9, in which the temperature in the dissolving zone (2) is controlled so that, during said method, the fluid does not crystallize after expansion, and so that the at least partially crystallized particles (20) do not melt.

11. Method according to one of Claims 1 to 10 such that the substance to be treated is placed in excess in the dissolving zone (2) before the method according to the invention is put into practice.

12. Method according to one of Claims 1 to 11, which is a continuous method put into practice in a chocolate tempering method.

13. Particles (20) crystallized by a method according to one of Claims 1 to 12.

14. Use of a method according to one of Claims 1 to 12, for producing particles in which the fat is at least partially crystallized, and preferably for producing particles in which the fat comprises crystallized particles of cocoa butter.

15. Device for implementing the method for producing at least partially crystallized particles according to any one of Claims 1 to 12, which comprises:
- at least a pressurizible first reactor (2) supplied via a first line (4, 6) that may be closed by a valve (5);
- at least a second reactor (3), supplied via a second line (7, 9, 11) that leaves the first reactor (2) and emerges in the second reactor at a spray means (12) allowing rapid depressurization, it being possible for said second line to be closed by a valve (8) and heated by a heating means (10); and
- a third line (13, 15), issuing from the second reactor, which includes a weir (14) serving to control the pressure in the second reactor, in order to maintain a pressure that is lower than the pressure of the first reactor but is equal to or higher than atmospheric pressure, the reactors (2, 3) each being provided with a heating means (16, 19) and each containing an internal basket (17, 18) that facilitates the collecting of the particles produced.

16. Device according to Claim 15, in which the spray means (12) is chosen so as to allow the depressurization time to be adjusted.

17. Device according to Claim 15 or 16, in which the first reactor (2) further includes at least one stirring means.

18. Use of a device according to one of Claims 15 to 17, for producing fat crystals, preferably for producing crystals of cocoa butter.

## Patentansprüche

1. Verfahren zur Herstellung von zumindest teilweise kristallisierten Teilchen (20, 21) unter Druck, umfassend das reziproke Lösen mindestens eines Fluids unter einem Druck, der über oder leicht unter dessen kritischem Druck liegt, mit mindestens einer zu behandelnden Substanz in einer Lösungszone (2), dann ein rasches Ablassen des Drucks durch mindestens ein Mittel zum Druckablassen (12) stromabwärts von der Lösungszone (2), derart, dass die zumindest teilweise kristallisierten Teilchen (21) in einer Sammelzone (3) gesammelt werden, die stromabwärts von dem Mittel zum Druckablassen (12) angeordnet ist, wobei die zu behandelnde Substanz Fett umfasst, wobei das Verfahren **dadurch gekennzeichnet ist, dass** man eine Sammlung von zumindest teilweise kristallisierten Teilchen (20) auch in der Lösungszone (2) vornimmt.

2. Verfahren nach Anspruch 1, derart, dass die Sammelzone (3) der Teilchen eine Umwandlungszone ist.

3. Verfahren nach einem der Ansprüche 1 oder 2, derart, dass das Fluid mit mindestens einem Cosolvens versetzt wird, welches dem Fluid in einer Menge von 1 bis 5 Gew.-% zugesetzt wird.

4. Verfahren nach einem der Ansprüche 1 bis 3, derart, dass das Fluid mit mindestens einem Cosolvens versetzt wird, bei dem es sich um einen Alkohol wie Ethanol handelt.

5. Verfahren nach einem der Ansprüche 1 bis 4, derart, dass man in der Lösungszone (2) und/oder der Sammelzone (3) die Trennung des Fluids in gasförmiger Form und der Teilchen in fester Form vornimmt.

6. Verfahren nach einem der Ansprüche 1 bis 5, in dem man mit mindestens einem Umwälzungsmittel die zu behandelnde Substanz und das Fluid während ihres reziproken Lösens in der Lösungszone (2) auf solche Weise umwälzt, dass die Lösung vor dem Ablassen des Drucks begünstigt wird.

7. Verfahren nach einem der Ansprüche 1 bis 6, in dem das Fluid unter Druck ausgewählt ist aus der Gruppe, die aus Kohlendioxid, Alkanen mit kurzer Kette, Stickstoffmonoxid und Stickstoff und deren Mischungen gebildet wird.

8. Verfahren nach einem der Ansprüche 1 bis 7, in dem das Fluid unter Druck Kohlendioxid ist.

9. Verfahren nach einem der Ansprüche 1 bis 8, in dem das Fluid unter Druck in superkritischem Zustand vorliegt.

10. Verfahren nach einem der Ansprüche 1 bis 9, in dem die Temperatur in der Lösungszone (2) im Verlauf des Verfahrens auf solche Weise gesteuert wird, dass das Fluid nach dem Ablassen des Drucks nicht kristallisiert und dass die zumindest teilweise kristallisierten Teilchen (20) nicht schmelzen.

11. Verfahren nach einem der Ansprüche 1 bis 10, derart, dass man vor der Durchführung des erfindungsgemäßen Verfahrens die zu behandelnde Substanz im Überschuss in die Lösungszone (2) gibt.

12. Verfahren nach einem der Ansprüche 1 bis 11, das ein kontinuierliches Verfahren ist und im Rahmen eines Verfahrens zum Tempern von Schokolade durchgeführt wird.

13. Teilchen (20), kristallisiert durch ein Verfahren nach einem der Ansprüche 1 bis 12.

14. Verwendung eines Verfahrens nach einem der Ansprüche 1 bis 12 für die Herstellung von Teilchen, deren Fett zumindest teilweise kristallisiert ist, und vorzugsweise zur Herstellung von Teilchen, deren Fett kristallisierte Kakaobutter-Teilchen umfasst.

15. Vorrichtung zur Durchführung des Verfahrens zur Herstellung von zumindest teilweise kristallisierten Teilchen nach irgendeinem der Ansprüche 1 bis 12, umfassend
mindestens einen ersten unter Druck setzbaren Reaktor (2), der durch eine erste Leitung (4, 6) gespeist wird, die durch einen Schieber (5) geschlossen werden kann, und
mindestens einen zweiten Reaktor (3), der durch eine zweite Leitung (7, 9, 11) gespeist wird, die aus dem ersten Reaktor (2) herausführt und in den zweiten Reaktor auf der Höhe eines Zerstäubungsmittels (12) einmündet, welches ein rasches Ablassen des Drucks ermöglicht, wobei die zweite Leitung durch einen Schieber (8) verschlossen und mittels eines Heizmittels (10) erwärmt werden kann, und
eine dritte Leitung (13, 15), die aus dem zweiten Reaktor herausführt und eine Austragungsvorrichtung (14) umfasst, welche es ermöglicht, den Druck in dem zweiten Reaktor so zu steuern, dass ein Druck unterhalb des Drucks des ersten Reaktors, aber oberhalb oder gleich Atmosphärendruck aufrechterhalten wird,
wobei die Reaktoren (2, 3) jeweils mit einem Heizmittel (16, 19) ausgestattet sind und jeweils einen inneren Korb (17, 18) enthalten, welcher die Sammlung der erzeugten Teilchen erleichtert.

16. Vorrichtung nach Anspruch 15, in der das Zerstäubungsmittel (12) so ausgewählt ist, dass es die Regulierung der Zeit des Druckablassens ermöglicht.

17. Vorrichtung nach Anspruch 15 oder 16, in der der erste Reaktor (2) darüber hinaus Mittel zum Umwälzen umfasst.

18. Verwendung einer Vorrichtung nach einem der Ansprüche 15 bis 17 für die Herstellung von Fettkristallen, vorzugsweise für die Herstellung von Kakaobutter-Kristallen.
